# EUROPÄISCHE PATENTANMELDUNG

(11) **EP 4 036 753 A1**
(43) Veröffentlichungstag der Anmeldung: **03.08.2022**
(21) Anmeldenummer: 21154744.3
(22) Anmeldetag: 02.02.2021
(51) Int. Cl.: G06F 16/25, G06F 16/28

(54) **VORRICHTUNG UND VERFAHREN ZUR AUFBEREITUNG VON DATEN**

(71) Anmelder: Siemens Aktiengesellschaft, 80333 München (DE)
(72) Erfinder: Aigner, Tobias, 81543 München (DE); Shyam Sunder, Swathi, 81549 München (DE)

(57) **Zusammenfassung**

Die Erfindung betrifft eine Vorrichtung und ein Verfahren zur Aufbereitung und/oder Zuordnung von Daten einer relationalen Datenbank zu Datenblöcken einer Graphdatenbank mittels R2RML. "R2RML" steht für "RDB to RDF Mapping Language", wobei "RDB" für "relationale Datenbank" und "RDF" die Abkürzung für "Resource Description Framework" ist. Nach der Erfindung wird eine Implementierung zumindest einer R2RML-Einheit und gegebenenfalls auch weiterer R2RML-Einheiten vorgeschlagen, wobei die Qualität eines R2RML-Mapping-Files erkannt und verbessert wird, eine Optimierung des Ablaufs des R2RML-Mapping initiiert werden kann und gegebenenfalls auch eine Visualisierung des R2RML-Mappings nach der Qualitätsverbesserung und gegebenenfalls nach der Optimierung des R2RML-Verfahrens erfolgt.

## Beschreibung

Die Erfindung betrifft eine Vorrichtung und ein Verfahren zur Aufbereitung und/oder Zuordnung von Daten einer relationalen Datenbank, insbesondere Sensordaten enthaltend, zu Datenblöcken einer Graphdatenbank mittels R2RML. "R2RML" steht für "RDB to RDF Mapping Language", wobei "RDB" für "relationale Datenbank" und "RDF" die Abkürzung für "Resource Description Framework" ist.

Das "RDF" (Resource Description Framework) ist ein Internet Protokoll und bezeichnet eine technische Interpretation im Internet zur Formulierung logischer Aussagen über beliebige Dinge (Resourcen). Um global eindeutige Bezeichner für Resourcen zu haben, werden diese dafür nach Konvention analog zu "URL" (Uniform Resource Locator) geformt. So können Daten weltweit einheitlich für Menschen automatisch sinnvoll dargestellt werden.

Eine derartige Aufbereitung relationaler Daten, wie z.B. Sensordaten, dient beispielsweise zur Weitergabe von Sensordaten einer Industrieanlage, die in Form von Spalten und Zeilen gespeichert vorliegen, also Daten einer relationalen Datenbank, zum Training an eine künstliche Intelligenz, wobei die Vorrichtung optional auch ein Anzeigegerät zur Darstellung der Transformation oder des Fortgangs der Transformation, umfassen kann und das Verfahren eine Zuordnung von Daten einer relationalen Datenbank zu RDF-Datenblöcken impliziert und damit die Erzeugung einer RDF-Datenblöcke ermöglicht und/oder einen Transfer der Daten in eine Graphdatenbank umfasst.

In der modernen IT-Infrastruktur sind relationale Datenbanken ein zentraler Bestandteil. Durch die in relationalen Datenbanken gespeicherten Daten werden nicht nur Geräte und/oder Automaten direkt, sondern ganze Stromversorgungssysteme, Verkehrsleitsysteme, industrielle automatisierte Anlagen etc. gesteuert und geregelt.

Beliebige heterogene Daten liegen in relationalen Datenbank-Systemen vor, die auf einer Sammlung von Tabellen basieren, in denen Datensätze in Form von Spalten und Zeilen erfasst und/oder abgespeichert vorliegen. Diese Daten sind in den Datenbanken strukturiert vorhanden und gespeichert. Sie können anhand ihrer Koordinaten in den Tabellen automatisiert erkannt und eingesetzt werden.

Zur Aufbereitung der Daten werden die Daten einer relationalen Datenbank in Daten einer Graphdatenbank gewandelt. Dabei handelt es sich um eine Synchronisation, Transformation und/oder Übersetzung von Daten in eine Form, die zur Speicherung in Form einer Graphdatenbank weiterverarbeitet werden kann. Die Datenaufbereitung kann auch der erste Schritt in Datenanalyseprojekten sein und kann viele diskrete Aufgaben umfassen.

Dabei werden zunächst die Daten einer relationalen Datenbank benutzerdefiniert RDF-Datenblöcken zugeordnet. Die Zuordnung zu RDF Datenblöcken bietet die Möglichkeit, vorhandene relationale Daten im RDF-Datenmodell anzuzeigen.

Ein RDF-Datenblock umfasst immer drei Einheiten, Subjekt, Prädikat und Objekt, wobei eine Resource als Subjekt mit einer anderen Resource oder einem Wert als Objekt näher beschrieben wird. Mit einer weiteren Resource als Prädikat bilden diese drei Einheiten ein Tripel. Das RDF-Modell ist ein Datenmodell mit einer wohldefinierten formalen Semantik, das auf gerichteten Graphen basiert. Daten in RDF sind Aussagen über Resourcen. Diese Aussagen werden dabei als Tripel modelliert. Die Menge der Tripel bildet einen - z.B. mathematischen Graphen - und wird als RDF-Modell bezeichnet. Das Tripel im RDF-Modell ist eine Aussage, die aus Subjekt, Prädikat und Objekt besteht. Die Menge der Tripel bildet einen mathematischen Graphen und wird als RDF-Modell bezeichnet. Beispielsweise Graphdatenbanken und/oder der Google Knowledge Graph basieren auf dieser Darstellung und Speicherung von Daten.

Eine Resource ist etwas, das eindeutig bezeichnet ist und worüber man etwas aussagen möchte. Subjekt und Prädikat sind immer Resourcen. Das Objekt kann entweder eine Resource oder nur ein Literal sein, wobei ein Literal eine Zusatzangabe, z.B. eine Datumsangabe oder ein Wahrheitswert, ist.

Datenaufbereitung ist die in der Regel der erste Schritt bei allen Verfahren, die darauf abzielen, Daten-gesteuerte Anwendungen anhand von heterogenen Daten zu erzeugen. Die Aufbereitung von in relationalen Datenbanken gespeicherten Daten ist jedoch noch mit einigen Fehlern behaftet, weil die Transformation von relational abgelegten Daten und solchen, die über Graphen in Beziehung zueinander gesetzt sind, schwierig und komplex ist.

Es werden viele Verfahren bereits eingesetzt, mit deren Hilfe die Daten einer relationalen Datenbank in eine Graphdatenbank überführt werden können, jedoch hat sich R2RML, eine Sprache zum Ausdrücken benutzerdefinierter Zuordnungen von relationalen Datenbanken zu RDF-Datenblöcken, hier bewährt. Solche Zuordnungen bieten die Möglichkeit, vorhandene relationale Daten im RDF-Datenmodell an einem Ausgabegerät und/oder in einem Speicher anzuzeigen, ausgedrückt in einer Struktur und einem Zielvokabular nach Wahl des Zuordnungsautors. R2RML-Zuordnungen sind selbst RDF-Diagramme und werden in der Turtle-Syntax niedergeschrieben.

R2RML ermöglicht verschiedene Arten von Mapping-Implementierungen. Prozessoren oder generell R2RML-Einheiten können beispielsweise einen virtuellen SPARQL-Endpunkt über den zugeordneten relationalen Daten anbieten oder RDF-Dumps generieren oder eine Schnittstelle für verknüpfte Daten automatisiert anbieten.

SPARQL (SPARQL Protocol and RDF Query Language) ist eine graphenbasierte Abfragesprache für RDF. Das RDF-Modell ist ein Datenmodell mit einer definierten formalen Semantik, das auf gerichtete Graphen - im Gegensatz zu den Tabellenbasierten relationalen Datenbanken - basiert.

"Mapping" oder "Datenmapping" wird der Prozess genannt, der Datenelemente zwischen unterschiedlichen Datenmodellen abbildet. Datenmapping wird beispielsweise mittels graphischer Mappingwerkzeuge umgesetzt, die automatisch ausführbare Transformationsprogramme erstellen. Bei dem hier in Rede stehenden so genannten "Datengetriebenem Mapping" wird aufgrund von Heuristiken und Statistiken versucht, automatisch auch komplexe Mappings zwischen zwei Datenquellen zu erkennen, wobei Datenteile, Datenzusammenführungen oder arithmetische Relationen erkannt werden. So können auch Ausnahmen erkannt werden, die nicht den erkannten Mapping-Logiken entsprechen, also Fehler sein könnten.

Durch die hier in Rede stehende R2RML-Zuordnung werden Daten einer vorgegebenen relationalen Datenquelle, z.B. von Sensoren, Messgeräten, industriellen Controllern, etc. zu einer oder mehreren sprachlich gefassten und/oder formal geordneten Darstellungen "graphs" einer Menge von Begriffen und der zwischen ihnen bestehenden Beziehungen in einem bestimmten Gegenstandsbereich zugeordnet. Diese automatisiert erfolgenden R2RML-Zuordnungen bilden dann eine Basis der Speicherung dieser Daten in einer Graphdatenbank oder einer RDF-Datei.

Beispiele eines industriellen Wissensgraphen sind Abbildungen in Form von Graphiken aus Knoten und Pfaden zwischen den Knoten, wobei die Knoten beispielsweise in industriellen Systemen physikalische Objekte, wie Sensoren, industrielle Steuerungen und/oder Kontrollsysteme wie PLCs, also "programmable logic controller", Roboter, Maschinen, Antriebe, Werkzeuge, Elemente einer Stückliste oder andere Hardwarekomponenten darstellen, aber auch abstraktere Entitäten wie Attribute und Konfigurationen dieser physischen Objekte, wie Produktionspläne und Maschinen-, Roboter und/oder Geräteeigenschaften entsprechen können. Eine abstrakte Entität ist beispielsweise eine IP-Adresse, ein Datentyp oder eine Anwendung, die durch ein industrielles System ausgeführt wird.

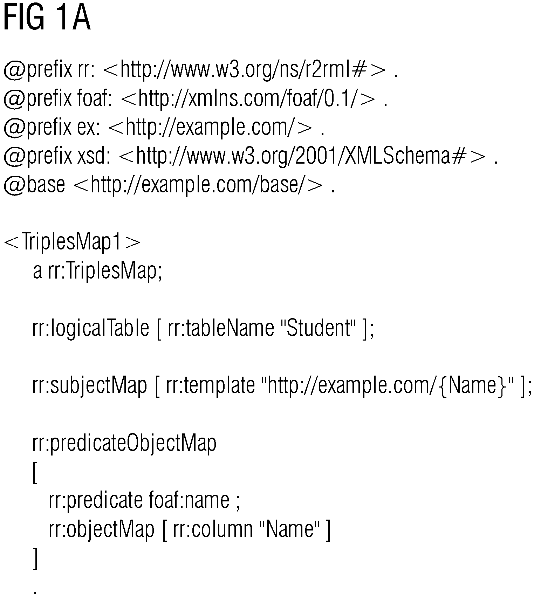

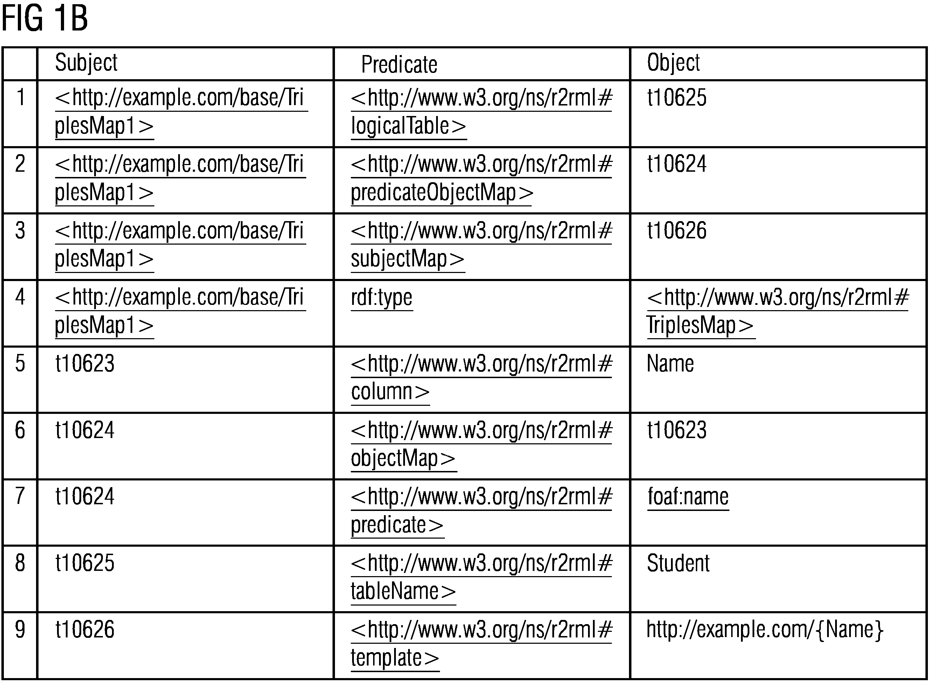

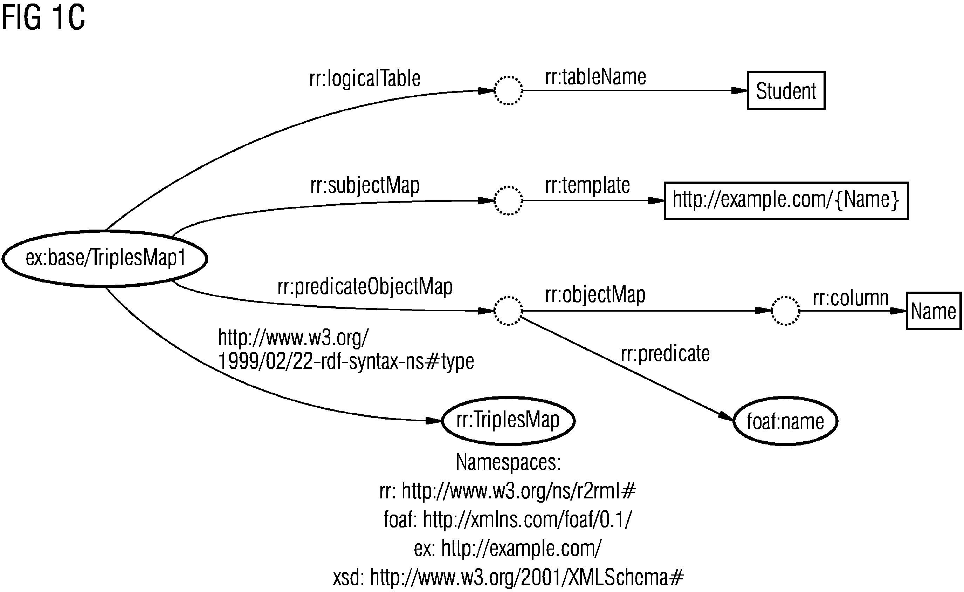

In den Figuren 1a bis 1c - Stand der Technik - wird gezeigt, wie - in Turtle Syntax wiedergegeben - die R2RML-Karte von Figur 1a in Form von Triples dargestellt wird, wie in Figur 1b, die dann graphisch in Form einer Triple-Karte, also TripleMap wie in Figur 1c gezeigt, ergibt.

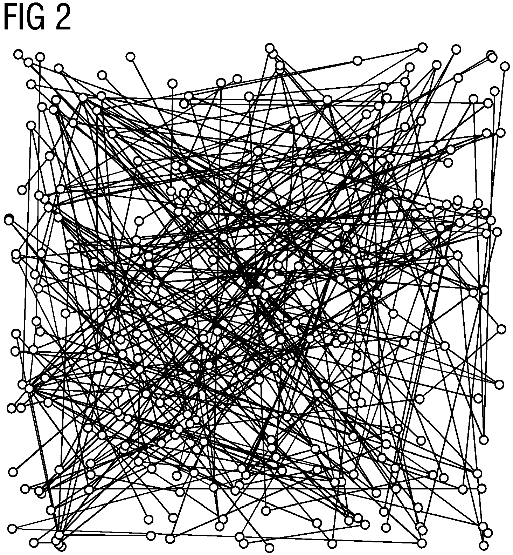

Eine derartige R2RML-Triple Karte "R2RML TripleMap" kann beispielsweise auf einem Ausgabe- und/oder Anzeigegerät wie einem Monitor, so wie in Figur 2 gezeigt, abgebildet werden.

Die R2RML-Zuordnung wird beispielsweise auf einem Anzeigegerät graphisch visualisiert. Dabei werden Knotenpunkte, die über Pfade verbunden sind, gezeigt, wie beispielsweise in Figur 2 - Stand der Technik - dargestellt.

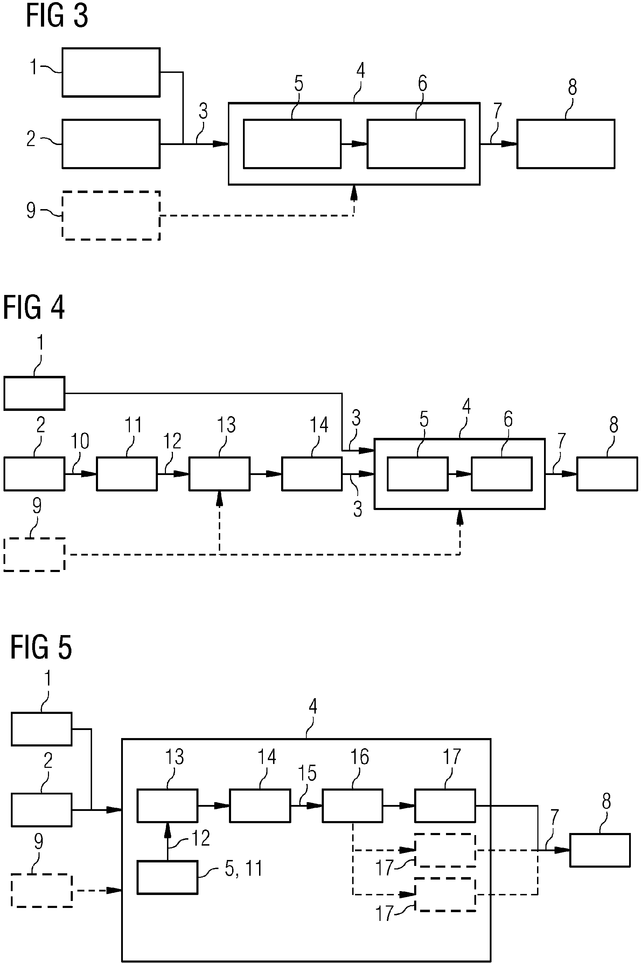

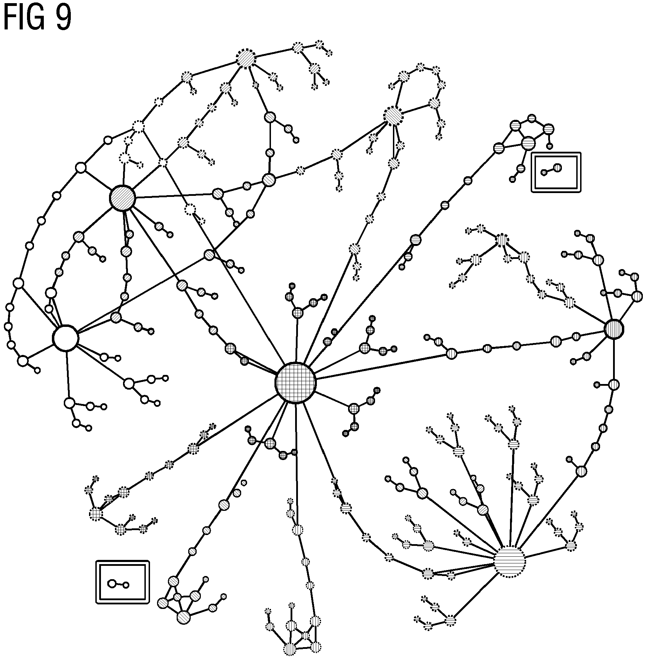

Figur 3 zeigt das Schema des bekannten R2RML-Prozesses: Daten einer relationalen Datenbank 1 werden, über eine erste R2RML-Einheit 2 zur Vor-Verarbeitung "Pre-Processing" und/oder Datenmining, beispielsweise in Form eines R2RML-Mapping Files vorliegend, über eine erste Schnittstelle 3 in ein R2RML-Modul 4 geleitet. Im R2RML-Modul 4 werden die Daten durch einen R2RML Parser 5 aufbereitet und daraus eine RDF-Datengeneration 6 erzeugt. Über eine endständige, also letzte Schnittstelle 7 des R2RML-Moduls 4 wird diese RDF-Datengeneration 6 im Speicher 8 als Datenbasis einer Graphdatenbank oder als RDF-Datenblock gespeichert. Optional kann dabei - wie gestrichelt dargestellt - eine Abbildung der erfolgten Zuordnung über einen Computer-implementierten Ontologie-Prozess 9 erfolgen. Eine derartige Abbildung 9 ist in Figur 2 wiedergegeben.

Nachteilig an dem bekannten Verfahren und dem bekannten R2RML Modul umfassenden Vorrichtung ist, dass diese Zuordnung fehleranfällig aufgrund verschiedener komplexer Verfahrensschritte ist. Diese Fehler zeigen sich jedoch erst beim Auslesen des Speichers 8. Leider ist es bei der Visualisierung durch den Ontologie-Prozess 9 wegen dessen Komplexität - siehe Figur 2 - nicht möglich, hier Fehler zu identifizieren.

So besteht Bedarf an einer - bevorzugt automatisiert durchführbaren - Qualitätsprüfung bei der Transformation von Daten einer relationalen Datenbank in eine Graphdatenbank mittels eines R2RML-Prozessors.

Aufgabe der vorliegenden Erfindung ist daher, die Nachteile des Standes der Technik zu überwinden und eine Vorrichtung zur Aufbereitung von relationalen Daten zu Datenblöcken als Datenbasis einer Graphdatenbank mittels R2RML sowie ein Verfahren zur Transformation von relationalen Daten mittels R2RML anzugeben, das die Qualität des R2RML-Mappings erkennbar macht und Verbesserungen sowie Optimierungen zur Verfügung stellt.

Diese Aufgabe wird durch den Gegenstand der vorliegenden Erfindung, wie er in der Beschreibung, den Figuren 4 bis 9 - weil die Figuren 1a bis 1c, sowie die Figuren 2 und 3 Darstellungen des Standes der Technik sind - und den Ansprüchen offenbart ist, gelöst.

Dementsprechend ist Gegenstand der vorliegenden Erfindung ein R2RML-Modul zur Aufbereitung von relationalen Daten zu RDF-Datenblöcken, mit mindestens einer Schnittstelle zu mindestens einem Speicherbereich zur Speicherung der generierten RDF-Datenblöcke,
∘ mindestens einer Schnittstelle zu einer Vorverarbeitung
∘ mindestens einer Schnittstelle zu einer Abbildung
∘ mindestens einer Schnittstelle zu einem Parser sowie
∘ einem oder mehreren Prozessoren, eingerichtet für
   ein Erzeugen zumindest einer RDF Datenblock-Generation,
   und
∘ einem oder mehreren R2RML Parser, die geeignet sind, relationale Daten zu empfangen, zu zerlegen und in erste R2RML Mappings umzuwandeln,
∘ mindestens einem Speicherbereich zur Speicherung der generierten RDF-Datenblöcke,
wobei
∘ das R2RML-Modul mittels eines ersten R2RML-Parser geeignet ist, empfangene relationale Daten RDF-Datenblöcken über das erste R2RML-Mapping zuzuordnen und in einem Speicherbereich als entsprechende RDF-Datenblöcke zu speichern, dadurch gekennzeichnet, dass
∘ ein oder mehrere Prozessoren vorgesehen sind, die eingerichtet sind für
∘ die Erzeugung eines zweiten R2RML-Mappings als Ergebnis einer dem ersten R2RML-Parser nachgeschalteten Qualitätsprüfung des ersten R2RML Mappings durch eine R2RML-Einheit und
∘ zumindest eine weitere Schnittstelle vorgesehen ist, durch die das zweite R2RML-Mapping übermittelbar ist.

Außerdem ist Gegenstand der Erfindung ein rechnergestütztes Verfahren zur Transformation von Daten einer relationalen Datenbank, Sensormessungen enthaltend, zu RDF-Datenblöcken einer Graphdatenbank, das Verfahren folgende Verfahrensschritte umfassend:
- Bereitstellen von relationalen Daten einer relationalen Datenbank
- Bereitstellung eines ersten R2RML-Mapping-Files,
- Zerlegung und Umwandlung der relationalen Daten mit Hilfe des ersten R2RML-Mapping-Files durch einen ersten R2RML-Mapping Parser
- Erzeugen zumindest einer Generation von RDF-Datenblöcken und
- Speichern der Generation von RDF-Datenblöcken als Datenbasis für eine Graphdatenbank und/oder eine RDF-Datei
dadurch gekennzeichnet, dass
- nach der Zerlegung und Umwandlung der Daten durch einen ersten R2RML-Parser eine Prüfung und Verbesserung der Qualität des erhaltenen R2RML-Mappings erfolgt und zumindest ein zweites R2RML-Mapping-File erstellt wird, auf Basis dessen die Zerlegung und Umwandlung der relationalen Daten zu RDF-Datenblöcken erfolgt.

Das erfindungsgemäße Computerprogramm wird in einem Prozessor abgearbeitet, welcher mit der Abarbeitung das Verfahren ausführt. Das erfindungsgemäße Computerprogrammprodukt sieht einen maschinenlesbaren Datenträger vor, auf dem ein Computerprogramm gespeichert ist, durch welches das Verfahren ausgeführt wird, wenn es in einem Prozessor abgearbeitet wird.

Beispielsweise betrifft die Erfindung eine Vorrichtung zur Aufbereitung von relationalen Daten zu Datenblöcken als Datenbasis einer Graphdatenbank und/oder zu RDF-Datenblöcken, die einen oder mehrere Prozessoren umfasst, letztere eingerichtet für
∘ eine Vorverarbeitung des R2RML Mappings von relationalen Daten wie Sensordaten,
∘ eine Abbildung zwischengespeicherter Daten einer oder mehrerer R2RML-Mappings durch eine Ontologie zur Visualisierung,
   und mit
∘ einem oder mehreren R2RML-Modulen, die
∘ ein oder mehrere R2RML Parser sowie Speicherbereiche umfassen, die geeignet sind, relationale Daten zu empfangen, zu zerlegen und in R2RML Mappings umzuwandeln,
∘ sowie Speichereinheiten zur Speicherung der generierten Datenblöcke,
∘ ein oder mehrere Anzeigegerät(e) zur optischen Wiedergabe der erzeugten ersten und/oder zweiten R2RML Mappings und wobei die Vorrichtung des weiteren
∘ eine oder mehrere Speicherbereiche (8) zur Speicherung der Daten in einer Graphdatenbank und
∘ dazugehörige Schnittstellen (3,7,10,12 und 15), wobei
∘ das R2RML-Modul der Vorrichtung mittels eines R2RML-Mapping Parser geeignet ist, empfangene relationale Daten RDF-Datenblöcken über die R2RML-Mapping-Regeln zuzuordnen und in einer Speichereinheit als entsprechende RDF-Datenblöcke zu speichern, insbesondere auf die Art, dass ein oder mehreren Prozessoren der Vorrichtung auch eingerichtet sind, für die Erzeugung eines zweiten R2RML-Mapping-Files als Ergebnis einer dem ersten R2RML-Parser nachgeschalteten Qualitätsprüfung durch eine R2RML-Einheit und
∘ eine weitere Schnittstelle vorgesehen ist, durch die das zweite R2RML-Mapping-File entweder im Rahmen der Vor-Verarbeitung über eine Schnittstelle an das R2RML Modul und/oder innerhalb des R2RML Moduls über eine andere Schnittstelle an eine oder mehrere R2RML-Einheit(en) übermittelbar ist.

Nach einer vorteilhaften Ausführungsform der Vorrichtung enthält das R2RML Modul zumindest eine weitere R2RML-Einheit, die, abgeleitet von dem zweiten R2RML-Mapping-File (14), ein optimiertes Transformationsverfahren des Daten-Mappings in Gang setzt, insbesondere eines zur Erzeugung und Speicherung optimierter und/oder mehrerer Generationen von RDF-Datenblöcken.

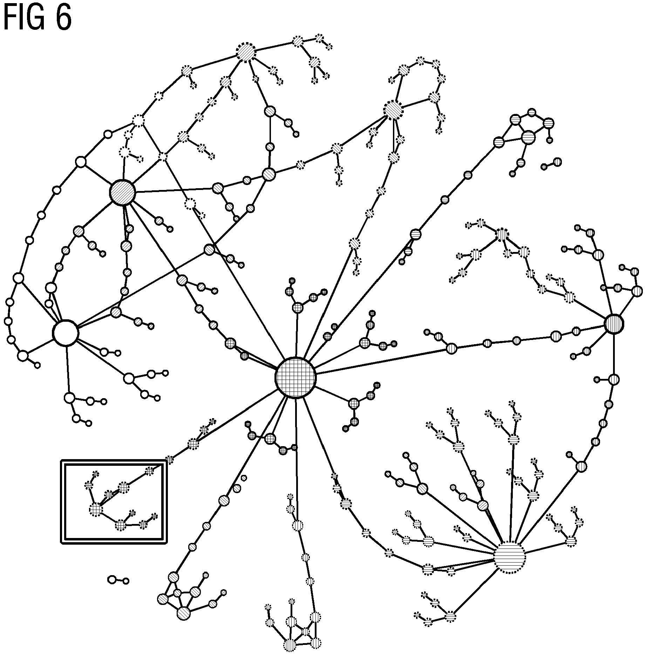

Nach einer weiteren vorteilhaften Ausführungsform des Verfahrens ist vorgesehen, dass aus dem zweiten R2RML-Mapping-File eine Abbildung entsprechend einer Ontologie vorgesehen ist, siehe Figuren 6 bis 9.

Nach einer vorteilhaften Ausführungsform der Erfindung ist das Verfahren ein Computerimplementiertes Verfahren zur Fehleranalyse durch R2RML-Einheit(en) zur Qualitätsprüfung und/oder Qualitätsverbesserung bei einer Transformation von Daten einer relationalen Datenbank mit Sensordaten, Spalten und Zeilen umfassend, über ein R2RML-Verfahren, das gegebenenfalls Zwischenergebnisse in Form von Mappings visualisiert, in Daten einer Graphdatenbank, Zusammenhänge umfassend, mit zumindest folgenden Verfahrensschritten:
- Überprüfen, ob jede Spalte der relationalen Datenbank in der Graphdatenbank einen korrespondierenden Knotenpunkt hat,
- Überprüfen, ob jede Zeile der relationalen Datenbank in der Graphdatenbank einen Pfad hat.

Der resultierende Graph, in Form des zweiten R2RML Mapping Files löst das technische Problem einer fehlerhaften Transformation und/oder Zuordnung von Metadaten einer relationalen Datenbank in eine Graphdatenbank.

Als eine "R2RML-Einheit" wird ein rechnergestützt arbeitendes Element bezeichnet, das mittels R2RML Mapping Regeln automatisiert relationale Daten transformiert und/oder abbildet. Eine R2RML-Einheit empfängt Daten über eine oder mehrere Schnittstelle(n), verarbeitet sie rechnergestützt unter Einbeziehung der R2RML-Regeln und leitet die Ergebnisse über eine oder mehrere weitere Schnittstelle(n) weiter. Eine R2RML-Einheit (11) kann Teil der Vor-Verarbeitung der Daten, Teil eines R2RML-Moduls, sowie Teil einer Visualisierung des R2RML-Mappings sein.

Unter einem "Prozessor" kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungs-spezifische integrierte Schaltung, engl. Application-Specific Integrated Circuit), oder einen DSP (Digitaler Signal-prozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens oder der Module, oder anderer Aspekte und/oder Teilaspekte der Erfindung realisiert.

Unter einem "Modul" kann im Zusammenhang mit der Erfindung beispielsweise ein Prozessor und/oder eine Speichereinheit zum Speichern von Programmcode verstanden werden. Beispielsweise ist der Prozessor speziell dazu eingerichtet, den Programmcode derart auszuführen, damit der Prozessor Funktionen ausführt, um das erfindungsgemäße Verfahren oder einen Schritt des erfindungsgemäßen Verfahrens zu implementieren oder realisieren. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Als "Ontologie" wird eine meist sprachlich gefasste und formal geordnete Darstellung einer Menge von Begriffen und der zwischen ihnen bestehenden Beziehungen in einem bestimmten Gegenstandsbereich bezeichnet. Eine Ontologie ist ein Netzwerk von Informationen mit logischen Relationen. Ontologien haben mit der Idee des semantischen Webs in den letzten Jahren einen Aufschwung erfahren und sind damit Teil der Wissensrepräsentation im Teilgebiet künstliche Intelligenz.

Als "semantisches Web" wird vorliegend ein erweitertes World Wide Web bezeichnet, bei dem Daten zwischen Rechnern einfacher austauschbar und für die Rechner oder Prozessoren einfacher verwertbar sind.

Gemäß der Erfindung wird prinzipiell vorgeschlagen, die Mappings, die aufgrund der automatisierten Transformation mittels R2RML erstellt werden, soweit wie möglich selbst als Graphen zu interpretieren. Es werden beispielsweise Graphen dabei erstellt, die die verbesserten, zweiten R2RML-Mapping-Files visualisieren.

Als "Parser" wird ein Computerprogramm bezeichnet, das für die Zerlegung und Umwandlung von Daten in ein für die Weiterverarbeitung geeigneteres Format nutzbar ist.

Als "Pre-Processing" wird eine Datenbereinigung, wie insbesondere auch "Datamining" verstanden. Dabei handelt es sich beispielsweise um das Erkennen fehlender Daten oder falscher Kombinationen, z.B.: Aussortieren von unmöglichen Datenkombinationen, wie z. B.: "Geschlecht: männlich; schwanger: Ja".

Unter "Datamining" versteht man die systematische Anwendung computergestützter Methoden, um in vorhandenen Datenbeständen Muster, Trends oder Zusammenhänge zu finden.

Unter "rechnergestützt" oder "computergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" oder "computergestützt" auch "computerimplementiert" zu verstehen.

Unter "Bereitstellen", insbesondere in Bezug auf Daten, Metadaten und/oder sonstige Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden. Unter "Bereitstellen" kann im Zusammenhang mit der Erfindung beispielsweise auch ein Laden oder ein Speichern, beispielsweise einer Transaktion mit entsprechenden Daten verstanden werden. Unter "Bereitstellen" kann beispielsweise auch ein Übertragen (oder ein Senden oder ein Übermitteln) von entsprechenden Daten von einem Knoten zu einem anderen Knoten verstanden werden.

In Figur 4 wird - in Anlehnung an die Darstellung des Standes der Technik in der Figur 3 - das durch eine R2RML-Einheit 13 nach der Erfindung erweitertes Schema gezeigt. Im Verlauf des Pre-Processing, also der Vor-Verarbeitung, das zumindest die Elemente oder Verfahrensschritte 10 bis 14 enthält, wird gemäß diesem Ausführungsbeispiel der Erfindung aus Figur 3 bekannten Element "2", der R2RML-Einheit für R2RML-Mapping, eine zweite, geprüfte und verbesserte R2RML-Einheit 14 für R2RML-Mapping erstellt. Dazu wird die ursprüngliche Einheit des ersten R2RML-Mapping-Files 2 über die Schnittstelle 10 einem zusätzlichen R2RML-Parser 11 übermittelt, der seine Ergebnisse über die Schnittstelle 12 an die R2RML-Einheit 13 zur Qualitätsprüfung und Verbesserung weiterleitet, die wiederum daraus das zweite R2RML-Mapping-File 14 erstellt, das über die Schnittstelle 3 an das R2RML-Modul 4 übermittelt wird. Die Elemente des R2RML-Moduls 4 sind nach dieser Ausführungsform der Erfindung unverändert zum Stand der Technik, wie in Figur 3, gezeigt.

Figur 5 zeigt eine andere Ausführungsform der Erfindung, bei der nicht das Pre-Processing, sondern die Elemente eines herkömmlichen R2RML-Moduls 4 ergänzt werden. Selbstverständlich können die beiden Ausführungsformen der Erfindung, wie in den Figuren 4 und 5 gezeigt, auch kombiniert eingesetzt werden. Dabei wird nach der Zerlegung und Umwandlung der relationalen Daten, Sensordaten umfassend, durch einen oder mehrere R2RML-Parser 5 und/oder 11 die Prüfung und Verbesserung des ersten R2RML-Files in der R2RML-Einheit 13 zur Qualitätsprüfung und/oder Qualitätsverbesserung durchgeführt, das Ergebnis über die Schnittstellen 12 und/oder 16 übermittelt und so ein zweites, verbessertes R2RML-Mapping File 14 entweder in das R2RML-Modul 4 eingespeist wird und/oder innerhalb des R2RML-Moduls 4 an eine R2RML-Einheit (16) übermittelbar ist.

In Figur 5 wird kein zusätzlicher R2RML-Parser eingesetzt, sondern ein R2RML-Parser 5 oder 11 übermittelt das Ergebnis der Umwandlung gemäß dem ersten R2RML-Mappings über die Schnittstelle 12 an die R2RML-Einheit 13 zur Qualitätsüberprüfung und Verbesserung. Diese generiert wie in dem in Figur 4 gezeigten Ausführungsbeispiel daraus ein zweites R2RML-Mapping 14, das eine weitere R2RML-Einheit 16 über die Schnittstelle 15 steuert. In der R2RML-Einheit 16 wird eine Optimierung des R2RML-Mappings gestartet, durch die anhand der empfangenen Ergebnisse durch Abgleich mit errechneten Daten eine
- Parallelität und/oder Verteilung der ablaufenden Zuordnung initiiert wird
- ein Clustern der Pfade/Knotenpunkte vorgenommen wird
- eine Identifikation von isolierten und/oder nicht verbundenen Knoten vorgenommen und beispielsweise deren Löschung und/oder Entfernen von nicht genutzten Klassen/Gruppen einer Ontologie bewirkt werden kann.

Besondere Vorteile der hier offenbarten Daten-Transformation mittels des verbesserten, zweiten R2RML-Mapping-Files 14 sind insbesondere:
- Mapping-Transformationen können parallel oder verteilt ausgeführt werden. Dies kann sowohl die Leistung als auch die Skalierbarkeit erhöhen.
- Eine Planung der Zuordnungsausführung wird ermöglicht, indem nicht verbundene Knoten gegenüber Zuordnungen zwischen Knoten im R2RML-Mapping erkannt werden.
- Effiziente Validierung der Qualität während der Mapping-Phase selbst wird ermöglicht und nicht erst nach der Generierung von Daten- / Wissensgraphen.
- Ein Erkennen und die Auflösung verschiedener Arten von Diskrepanzen in Mappings in Bezug auf die Semantik wird möglich.
- Schließlich werden noch das Erkennen und eine Auflösung verschiedener Arten von Diskrepanzen in Mappings in Übereinstimmung mit der Ontologie wird ermöglicht.

Die R2RML-Einheit 13 zur Qualitätsprüfung und - verbesserung des R2RML-Mappings führt mit Hilfe des zweiten Mapping Files 14 automatisiert folgende Verfahrensschritte aus:
- Anpassung der Größe der Knotenpunkte an die Anzahl der mit diesem Knotenpunkt verbundenen Pfade,
- Identifizierung von Communities, also von Gruppen verbundener Knoten, beispielsweise mittels der Louvain-Methode zur Optimierung der Modularität.

Nach einer vorteilhaften Ausführungsform der Erfindung wird über eine R2RML-Einheit 9 mit geeigneter Ontologie das zweite R2RML-Mapping-File (14) an einem Anzeigegerät, das ein bildgebendes Gerät, wie beispielsweise ein Monitor sein kann, dargestellt. Dieser Darstellung entsprechen die Figuren 6 und 9.

Dabei wird die Darstellung der Knotenpunkte, die gefüllt oder leer sein können, an die Anzahl der mit dem Knotenpunkt verbundenen Pfade angepasst, so dass ein Knotenpunkt, von dem aus viele Pfade abgehen, größer ist als ein Knotenpunkt, der nur wenige Pfade verbindet.

Zudem werden die aufgefundenen Communities, jeweils Knoten und Pfade umfassend, durch gleiche Farbe gekennzeichnet.

So kann anstelle der bisher üblichen Darstellung einer R2RML-Mapping-Files, wie in Figur 2 dargestellt, nach erfolgtem Clustering und/oder Identifizierung der Communities eine Darstellung eines zweiten R2RML-Mapping-Files 14 wie sie Figur 6 zeigt, erzeugt werden.

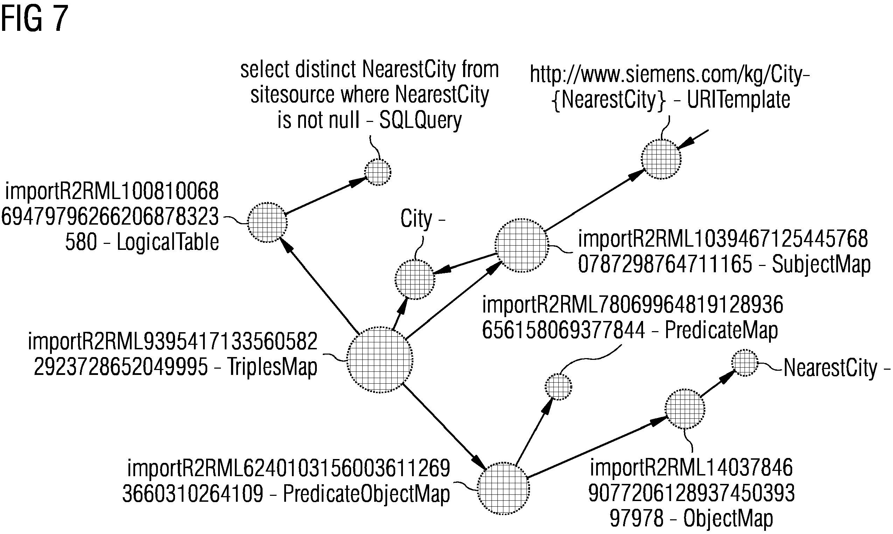

Figur 7 zeigt das gekennzeichnete und vergrößerte Detail aus Figur 6. Hier wird ersichtlich, wie nach der hier erstmals vorgeschlagenen Methode zur Erzeugung eines zweiten R2RML-Mapping-Files die Cluster und/oder Communities deutlicher identifizierbar sind.

Die in Figur 7 gezeigte Darstellung bietet insbesondere einige nützliche Einblicke in das Mapping, von denen die interessantesten unten aufgeführt sind.
1. Abhängigkeiten innerhalb und zwischen Mapping-Regeln werden offensichtlich.
2. Die verschiedenen Cluster/Communities verweisen auf einzelne Zuordnungsregeln - entsprechend 1 TriplesMap oder einem Satz verwandter Zuordnungsregeln - entsprechend mehrerer TriplesMaps.

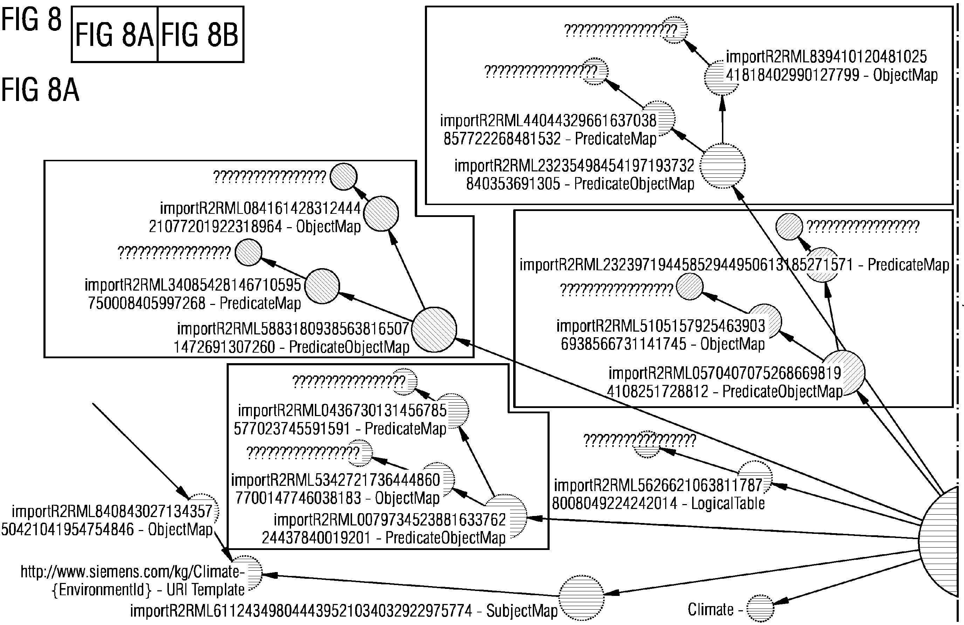

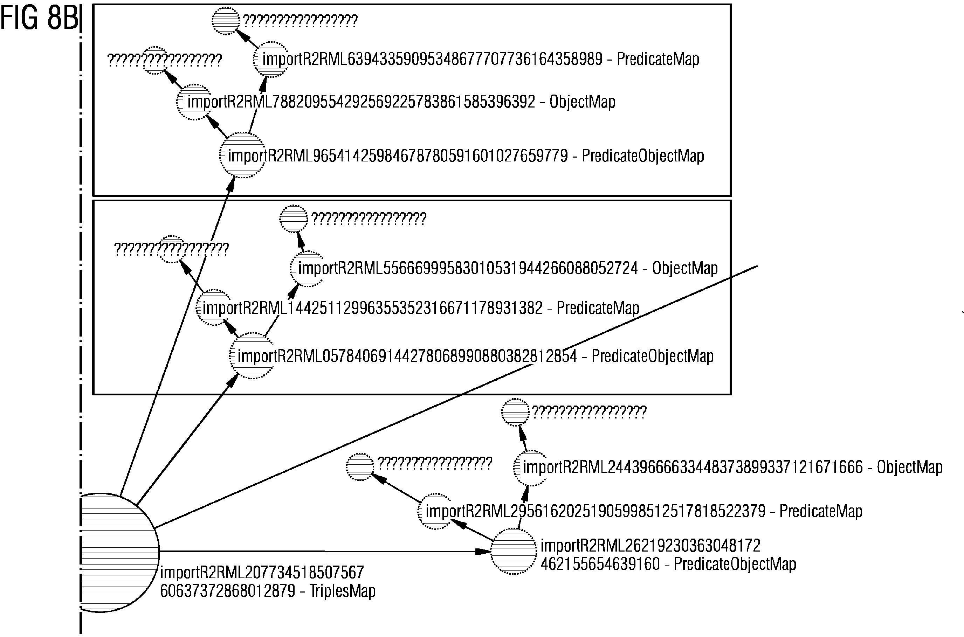

Insbesondere kann gemäß der Erfindung eine R2RML-Einheit zur Qualitätsprüfung und/oder Qualitätsverbesserung 13 und das sich daraus ergebende zweites R2RML-Mapping-File 14, wie in den Figuren 4 bis 8 gezeigt, auf verschiedene Arten den R2RML-Zuordnungsprozess optimieren:
1. Bei der Ausführung und/oder Generierung der Mappings, insbesondere im R2RML Mapping Parser:
   - Das automatisierte Erstellen von Zuordnungen per R2RML ist ein Kapazitäts-intensiver Prozess. Gemäß dem in Figur 8 gezeigten Ausführungsbeispiel der Erfindung dienen, basierend auf der Anzahl der Daten und Zuordnungen, die identifizierten Cluster/Communities im Zuordnungsdiagramm als Blöcke, die parallel oder nacheinander ausgeführt werden, wodurch die Leistung und die Skalierbarkeit beim Erstellen der Mappings im Prozessor verbessert werden.
   - B) Da die Abhängigkeiten innerhalb und zwischen den Zuordnungsregeln (Mapping Rules) durch die Darstellung - im Vergleich zur Darstellung beispielsweise der Figur 2 - offensichtlich sind, kann das Zuordnungsdiagramm als Abhängigkeitsdiagramm oder sogar als abhängiges azyklisches Diagramm interpretiert werden, was eine geplante Ausführung von Zuordnungsregeln ermöglicht. Beispielsweise sind die umrandeten Blöcke alle unabhängige Blöcke für sich, die in beliebiger Reihenfolge ausgeführt werden können. Nach erfolgtem Abschluss aller dieser Blöcke kann der abhängige Block - dargestellt als großer Kreis mit der ID, die mit "12879 TriplesMap" endet, zugeordnet werden, siehe Figur 8.
2. Bei der Verbesserung der Qualität der Zuordnungen:
   - Gemäß dem R2RML-Prozess im R2RML-Mapping Parser wird gefordert, dass jede Zuordnungsregel mindestens 1 TriplesMap (Subjekt, Prädikat, Objekt) enthält, die wiederum einen Verweis auf eine Logical Table, SubjectMap und mindestens einen Prädikat/Objekt-Map enthält. Dies wird gemäß einem bevorzugten Ausführungsbeispiel der Erfindung über eine SPARQL-Abfrage geprüft. Die Zuordnungen, die diese Anforderungen nicht erfüllen, können daher leicht identifiziert werden.
   - Aufgrund der Visualisierung, die auch ohne Anzeigegerät automatisch innerhalb des Prozessors stattfinden kann, können nicht verbundene Pfade und/oder Knoten leicht erkannt werden. Diese Unterbrechungen können verschiedene Ursachen haben:
      ∘ A) unvollständige Zuordnungen, wie, beispielsweise, wenn die SubjektMap, ObjektMap, PrädikatMap und/oder die Objekt/PrädikatMap zwar definiert, aber nicht ausgeführt, verlinkt und/oder bei der Zuordnung einen Verweis darauf erfolgte. Nach dem Erkennen dieser Fehler können sie über Hinzufügen von Verweisen auf die nicht verbundenen Knoten mithilfe von SPARQL-Aktualisierungsabfragen repariert werden. Die kann automatisiert oder manuell über eine Visualisierung des fehlerhaften Mappings, siehe Figur 8, erfolgen.
      ∘ B) ungenutzte R2RML-Blöcke: Dies tritt auf, wenn SubjektMap, ObjektMap, PrädikatMap und/oder die Objekt/PrädikatMap zwar definiert sind, aber nicht mehr gebraucht werden, also redundant sind. Dies kann beispielsweise bei (Legacy-)Zuordnungen auftreten, bei denen mehrere Änderungen vorgenommen wurden, die jedoch nicht konsistent aktualisiert wurden. Diese Fehler können - auch wieder mithilfe entsprechender SPARQL-Aktualisierungsabfragen - erkannt und durch Entfernen der R2RML-Mapping Blöcke aus dem zweiten R2RML-Mapping-File behoben werden.
3. Beim Qualitätsmanagement der R2RML-Mapping-Files in Bezug auf die Ontologie:
   Während der Aufbereitung durch den R2RML-Mapping Parser wird gemäß einer vorteilhaften Ausführungsform der Erfindung vorgeschlagen, dass eine Ontologie angewendet wird, wobei die "OWL - Web Ontology Language" - eine Spezifikation des World Wide Web Consortiums, beispielsweise angewendet werden kann. Dadurch ergibt sich die Möglichkeit zusätzlicher Erkenntnisse aus dem zweiten R2RML-Mapping-File und/oder auch eine weitere Qualitätsprüfung.
   Nach der erfolgten Anwendung der Ontologie wird beispielsweise zusätzlich vorgeschlagen, die gleichen Verfahrensschritte, wie beim Auffinden der Cluster und/oder Communities - z.B. über die Louvain Methode - durchzuführen. Wenn die Zuordnung konsistent ist und mit der Ontologie vereinbar, dann kann davon ausgegangen werden, dass folgende Voraussetzungen erfüllt sind: beispielsweise sollte ein R2RML-Prädikat des Mappings gültigen Daten- und/oder Objekteigenschaften in der Ontologie entsprechen, sowie eine R2RML-Klasse in dem Mapping einer gültigen Klasse in der Ontologie entsprechen.
   Unverbundene Knoten und/oder Pfade können dabei Hinweise auf folgende Sachverhalten darstellen:
      - Eine Ontologie-Vergrößerung könnte erforderlich sein, beispielsweise könnte die Ontologie erweitert und/oder abgeändert werden, insbesondere beispielsweise durch Hinzufügen und/oder Umbenennung von Klassen und/oder Daten/Objekt-Eigenschaften aufgrund fehlerhafter oder fehlender Bezüge im Mapping.
      - Eine Ontologie-Aktualisierung könnte erforderlich sein, beispielsweise könnte ein unverbundener Knoten ein Hinweis auf ein Entfernen veralteter Klassen und/oder Eigenschaften in der Ontologie, der Ontologiekonzepte, also der Klassen, Daten und/oder Objekteigenschaften sein, durch das die Ontologie aktueller wäre. Klassen, Daten und/oder Objekteigenschaften, die keine Referenzen in den Zuordnungen haben, können also sowohl gültig und erforderlich - also aktuell - oder auch zu redundanten Konzepten gehörig - also veraltet - sein.

Diese Zusammenhänge sind insbesondere auch durch die Aufarbeitung des R2RML-Mapping-Parser-Ergebnisses in dem Prozessor 13 aus den Figuren 4 und 5 abrufbar, wodurch gemäß vorliegender Erfindung ein zweites R2RML-Mapping-File" 14 erstellt wird, das zur weiteren Zuordnung einsetzbar ist - siehe Figuren 4 und 5. Falls eine Ausführungsform der Erfindung verwendet wird, bei der der Prozessor zur Qualitätsprüfung und/oder Qualitätsverbesserung sich innerhalb des R2RML-Moduls befindet - siehe Figur 5 - dann können diese Ergebnisse insbesondere auch automatisiert zur Optimierung des Verfahrens, also Parallelität unabhängig ablaufender Clusterfindungen, Löschung unverbundener Knoten und/oder Pfade nach entsprechender SPRQL-Aktualisierungsabfragen, eingesetzt werden.

Ein "Mapping" entspricht einer "Zuordnung". Ein R2RML-Mapping ist dementsprechend auch eine R2RML-Zuordnung. Ein R2RML-Mapping-File ist eine R2RML-Zuordnungs-Karte, wie sie beispielsweise in den Figuren 2, 6, 7 (nur Detail) 8 und 9 visualisiert, also dargestellt ist.

Optimierung einer Mapping Datei gemäß dem in Figur 5 gezeigten Ausführungsbeispiel, bei dem ein R2RML-Modul eingesetzt wird, das innerhalb des Moduls einen Prozessor 16 zur Optimierung anhand des zweiten Mapping-Files 14 umfasst.

Zur Optimierung des gesamten R2RML-Transformations-Prozesses über den Prozessor 16 zur Optimierung ist es nicht nötig, dass diese Zusammenhänge visualisiert werden.

Durch das hier gezeigte R2RML-Verfahren werden Informationen aus der Darstellung und/oder der Datengeneration eines R2RML Mapping Verfahrens herausgeholt, die eine Fehleranalyse der automatisierten R2RML-Zuordnung von relationalen Daten zu RDF-Datenblöcken erlauben und gegebenenfalls in der Folge zumindest eine Optimierungsmöglichkeit für die automatisierte Zuordnung von relationalen Daten zu RDF-Datenblöcken schaffen. Dazu wird optional auch eine Darstellung, Visualisierung und/oder Repräsentation eines R2RML-Mapping geschaffen, das hier als zweites R2RML-Mapping-File 14 bezeichnet wird, die eine Möglichkeit zur Messung der Vollständigkeit und/oder der Güte des erfolgten R2RML-Mappings zur Verfügung stellt.

Durch eine Identifikationsinformation - beispielsweise im zweiten R2RML-Mapping-File (14) - kann insbesondere ein Nachweis bereitgestellt werden, der angibt, dass der entsprechende Datenblock von einem bestimmten Knoten eingefügt wurde bzw. seine Herkunft angibt.

Bei den relationalen Daten handelt es sich beispielsweise um Datenbanken von Geräten eines technischen Systems und/oder einer industriellen Anlage und/oder eines Automatisierungsnetzes und/oder einer Fertigungsanlage. Dabei können die Geräte beispielsweise Feldgeräte sein oder Geräte im Internet der Dinge sein.

Ein Ausgabe- und/oder Anzeigegerät, wie es optional ein Bestandteil der vorliegend offenbarten Vorrichtung zur Aufbereitung von relationalen Daten zu Datenblöcken als Datenbasis einer Graphdatenbank und/oder zu RDF-Datenblöcken ist, ist insbesondere geeignet für die Anzeige von R2RML-Triple Karten mit Knotenpunkten und Pfaden, die eine R2RML-Triple-Verknüpfung graphisch wiedergeben.

Ein Anzeigegerät umfasst dabei insbesondere einen bildgebenden Bestandteil, wie ein Screen, einen Monitor oder ähnliches.

Insbesondere kann die Anzahl der Pfade pro Knotenpunkt durch die Größe der Knotenpunkte und Zusammengehörigkeit der Pfade erkannt und gegebenenfalls bei einer Visualisierung durch Farbe sichtbar gemacht werden, damit
- A) Automatisiert - im Prozessor 13 - erkannt werden kann, welche Pfade "ins Leere laufen" also fehlerhaft sind und/oder
- B) Automatisiert - ebenfalls im Prozessor 13 - abgeglichen werden kann, ob alle relational empfangenen Daten auch zumindest einem RDF Datenblock zugeordnet sind,
dabei ist zumindest eine
- Kommunikations-Schnittstelle vorgesehen, die derart eingerichtet ist, dass sie Ergebnisse von A) und/oder B) empfängt und daraus ein zweites R2RML-Mapping File 14, entweder während des Pre-Processing oder innerhalb des R2RML-Transformations-Verfahrens an einen weiteren Prozessor 16 innerhalb des R2RML-Moduls weitergibt, der
- anhand der empfangenen Ergebnisse durch Abgleich mit errechneten Daten eine
- Parallelität der ablaufenden Zuordnung initiieren kann
- Ein Clustern der Pfade /Knotenpunkte vornehmen kann
- Identifikation von isolierten und/oder nicht verbundenen Knoten vornehmen kann und beispielsweise deren Löschung und/oder Entfernen von nicht genutzten Klassen/Gruppen einer Ontologie bewirkt. Andererseits kann diese Identifikation auch dazu dienen, dass eine Ontologie entsprechend erweitert, aktualisiert und/oder abgeändert wird.

Nach der Erfindung wird eine Implementierung zumindest einer R2RML-Einheit und gegebenenfalls auch weiterer R2RML-Einheiten vorgeschlagen, wobei die Qualität eines R2RML-Mapping-Files erkannt und verbessert wird, eine Optimierung des Ablaufs des R2RML-Mapping initiiert werden kann und gegebenenfalls auch eine Visualisierung des R2RML-Mappings nach der Qualitätsverbesserung und gegebenenfalls nach der Optimierung des R2RML-Verfahrens erfolgt.

### Bezugszeichenliste

- 1: relationale Datenbank
- 2: R2RML-Einheit mit R2RML Mapping File
- 3: Schnittstelle zum R2RML-Modul
- 4: R2RML-Modul
- 5: R2RML Mapping Parser des R2RML Moduls
- 6: Speicher der RDF Generation
- 7: endständige Schnittstelle des R2RML Moduls
- 8: Speicher für Datenbasis einer Graphendatenbank oder RDF-Datei
- 9: R2RML-Einheit mit Ontologie zur Visualisierung des Mappings
- 10: Zweite Schnittstelle zum R2RML Parser des Pre-Processing
- 11: R2RML Mapping Parser des Pre-Processing
- 12: Dritte Schnittstelle zum Qualitätsprüfer, die entweder Teil des Pre-Processing ist oder innerhalb des R2RML Moduls liegt
- 13: R2RML-Einheit zur Qualitätsprüfung und/oder Qualitätsverbesserung des R2RML Mappings
- 14: Verbessertes, zweites R2RML-Mapping-File
- 15: Vierte Schnittstelle innerhalb des R2RML-Moduls
- 16: Optimierter R2RML-Parser
- 17: Speicher 1, 2,...n für RDF-Generation 1, RDF-Generation 2... RDF-Generation n

## Patentansprüche

1. R2RML-Modul (4) zur Aufbereitung von relationalen Daten zu RDF-Datenblöcken, mit
∘ mindestens einer Schnittstelle (3,7,10 und 12) zu mindestens einem Speicherbereich (6,8, 17) zur Speicherung der generierten RDF-Datenblöcke,
∘ mindestens einer Schnittstelle (3) zu einer Vorverarbeitung (1,2)
∘ mindestens einer Schnittstelle zu einer Abbildung (9)
∘ mindestens einer Schnittstelle zu einem Parser (5,11)
sowie
∘ einem oder mehreren Prozessoren, eingerichtet für ein Erzeugen zumindest einer RDF Datenblock-Generation, und
∘ einem oder mehreren R2RML Parser (5), die geeignet sind, relationale Daten zu empfangen, zu zerlegen und in erste R2RML Mappings umzuwandeln,
∘ mindestens einem Speicherbereich (6,17) zur Speicherung der generierten RDF-Datenblöcke,
wobei
∘ das R2RML-Modul (4) mittels eines ersten R2RML-Parser (5) geeignet ist, empfangene relationale Daten (1) RDF-Datenblöcken über die R2RML-Mapping-Regeln zuzuordnen und in einem Speicherbereich (6, 8, 17) als entsprechende RDF-Datenblöcke zu speichern,
**dadurch gekennzeichnet, dass**
∘ ein oder mehrere Prozessoren vorgesehen sind, die eingerichtet sind für
∘ die Erzeugung eines zweiten R2RML-Mappings (14) als Ergebnis einer dem ersten R2RML-Parser (5) nachgeschalteten Qualitätsprüfung des ersten R2RML Mappings durch eine R2RML-Einheit (13) und
∘ zumindest eine weitere Schnittstelle (10, 12, 15) vorgesehen ist, durch die das zweite R2RML-Mapping (14) übermittelbar ist.

2. R2RML-Modul (4) nach Anspruch 1, **dadurch gekennzeichnet, dass** eine Schnittstelle (15) vorgesehen ist, über die eine R2RML-Einheit (16) innerhalb des R2RML-Moduls (4) das zweite R2RML-Mapping-File (14) empfängt.

3. R2RML-Modul (4) nach Anspruch 2, wobei die R2RML-Einheit (16) nach Erhalt des zweiten R2RML-Mapping-Files (14) automatisiert einen Optimierungsprozess startet.

4. R2RML-Modul (4) nach einem der vorhergehenden Ansprüche, **dadurch gekennzeichnet, dass** die R2RML Einheit (16) einen Prozess zur Optimierung des Mappings auf Basis des zweiten R2RML-Mapping-Files (14) startet.

5. R2RML-Modul (4) nach Anspruch 4, **dadurch gekennzeichnet, dass** der Prozess zur Optimierung im R2RML-Modul (4) die Erzeugung mehrerer RDF-Datenblock-Generationen auslöst, die in entsprechenden Speicherbereichen (17) gespeichert sind.

6. R2RML-Modul (4) nach Anspruch 4, **dadurch gekennzeichnet, dass** der Prozess zur Optimierung im R2RML-Modul (4) die parallele und gleichzeitige Erzeugung mehrerer RDF-Datenblock-Generation(en) auslöst, die in entsprechenden Speicherbereichen (17) gespeichert sind.

7. R2RML-Modul (4) nach einem der vorhergehenden Ansprüche, das mit einem Prozessor, der geeignet ist für eine Vorverarbeitung (1, 2) des R2RML Mappings von relationalen Daten wie Sensordaten, über eine Schnittstelle (3,7,10,12) verbunden ist.

8. R2RML-Modul (4) nach einem der vorhergehenden Ansprüche, das mit einem Prozessor, der geeignet ist für eine Abbildung zwischengespeicherter Daten einer oder mehrerer ersten und/oder zweiter R2RML-Mappings durch eine Ontologie (9) zur Visualisierung verbunden ist.

9. R2RML-Modul (4) nach einem der vorhergehenden Ansprüche, wobei in einer R2RML-Einheit eine Ontologie (9) zum Abgleich mit dem zweiten R2RML-Mapping-File (14) vorgesehen ist.

10. R2RML-Modul (4) nach einem der Ansprüche 8 oder 9, **dadurch gekennzeichnet, dass** mit der R2RML-Einheit (9) ein Ausgabegerät verbunden ist, das das Ergebnis des Abgleichs des zweiten R2RML-Mapping Files (14) mit der Ontologie visualisiert.

11. Rechnergestütztes Verfahren zur Transformation von Daten einer relationalen Datenbank, Sensormessungen enthaltend, zu RDF-Datenblöcken einer Graphdatenbank, das Verfahren folgende Verfahrensschritte umfassend:
- Bereitstellen von relationalen Daten einer relationalen Datenbank (1)
- Bereitstellung eines ersten R2RML-Mapping-Files (2),
- Zerlegung und Umwandlung der relationalen Daten (1) mit Hilfe des ersten R2RML-Mapping-Files (2) durch einen ersten R2RML-Mapping Parser (5)
- Erzeugen zumindest einer Generation von RDF-Datenblöcken (6) und
- Speichern (8) der Generation von RDF-Datenblöcken als Datenbasis für eine Graphdatenbank und/oder eine RDF-Datei
**dadurch gekennzeichnet, dass**
- nach der Zerlegung und Umwandlung der Daten durch einen ersten R2RML-Parser (5) eine Prüfung (13) und Verbesserung (14) der Qualität des erhaltenen R2RML-Mappings erfolgt und zumindest ein zweites R2RML-Mapping-File (14) erstellt wird, auf Basis dessen die Zerlegung und Umwandlung der relationalen Daten (1) zu RDF-Datenblöcken erfolgt.

12. Verfahren nach Anspruch 11, **dadurch gekennzeichnet, dass**
das zweite R2RML-Mapping-File (14) bereits in der Vor-Verarbeitung erzeugt wird.

13. Verfahren nach Anspruch 11 oder Anspruch 12, **dadurch gekennzeichnet, dass** das zweite R2RML-Mapping-File (14) innerhalb der R2RML-Moduls (4) erzeugt wird.

14. Verfahren nach einem der Ansprüche 11 bis 13,
**dadurch gekennzeichnet, dass** über die zusätzliche R2RML-Einheit (16) ein optimiertes Transformationsverfahren des Daten-Mappings in Gang gesetzt wird.

15. Verfahren nach Anspruch 14, **dadurch gekennzeichnet, dass** über das optimierte Transformationsverfahren des R2RML-Mappings mehrere RDF-Datenblock-Generationen erzeugt werden.

16. Verfahren nach Anspruch 15, **dadurch gekennzeichnet, dass** über das optimierte Transformationsverfahren des R2RML-Mappings innerhalb des Verfahrens mehrere RDF-Datenblock-Generationen gleichzeitig, also parallel erzeugt werden.

17. Verfahren nach einem der Ansprüche 11 bis 16,
**dadurch gekennzeichnet, dass** das Ergebnis des zumindest einen R2RML-Mapping-Parser an eine weitere R2RML-Einheit (9) zum Abgleich mit einer Ontologie und gegebenenfalls zur Visualisierung geleitet wird.

18. Computerprogramm mit einem Programmcode zur Durchführung eines Verfahrens gemäß einem der vorgenannten Ansprüche 11 bis 17, wenn der Programmcode auf einem Computer ausgeführt wird.

19. Computerprogrammprodukt mit einem auf einem maschinenlesbaren Datenträger gespeicherten Programmcode zur Durchführung eines Verfahrens gemäß einem der vorgenannten Patentansprüche 9 bis 13, wenn der Programmcode auf einem Computer ausgeführt wird.
